# EUROPÄISCHE PATENTSCHRIFT

(11) **EP 2 746 100 B1**
(45) Veröffentlichungstag und Bekanntmachung des Hinweises auf die Patenterteilung: **22.02.2017**
(21) Anmeldenummer: 13196538.6
(22) Anmeldetag: 10.12.2013
(51) Int. Cl.: B60N 2/50, B60N 2/06, B60N 2/14, B60N 2/015

(54) **Nutzfahrzeugsitz mit einem Verriegelungselement**
Commercial vehicle seat with a locking element
Siège de véhicule utilitaire doté d'un élément de verrouillage

(30) Priorität: 18.12.2012 DE 102012112529
(43) Veröffentlichungstag der Anmeldung: 25.06.2014
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A2- 1 659 021
- WO-A1-2010/114966
- CN-U- 202 480 912
- US-A1- 2008 211 284

## Beschreibung

Die Erfindung betrifft ein Nutzfahrzeugsitz mit einem Sitzteil, mit einem Rückenlehnenteil und mit einem Sitzunterbau zum Anordnen an einem Karosserieteil eines Nutzfahrzeugs, bei welchem der Sitzunterbau eine Verriegelungseinrichtung zum Sichern einer unbeabsichtigten Drehbewegung einer Drehverstelleinrichtung zum Drehen zumindest des Sitzteils gegenüber dem Karosserieteil aufweist, wobei die Verriegelungseinrichtung ein entlang einer Verschiebeachse translatorisch verschieblich gelagertes Verriegelungselement zum Festlegen der Drehverstelleinrichtung umfasst.

Gattungsgemäße Fahrzeugsitze mit einer entsprechenden Drehverstelleinrichtung, welche hinsichtlich einer Drehbewegung mittels einer Verriegelungseinrichtung festlegbar ist, sind aus dem Stand der Technik gut bekannt. Diese Verriegelungseinrichtungen verfügen oftmals über eine Verriegelungseinheit, welche ein Bolzenelement aufweist, mit welchem zwei zueinander drehbar gelagerte Bauteile der Drehverstelleinrichtung zueinander festgelegt werden können. In der Regel befindet sich die Verriegelungseinheit auf Seiten eines drehfest angeordneten Bauteils, während an dem hierzu entsprechend drehbar gelagerten Bauteil eine Eingriffsmöglichkeit, wie beispielsweise eine Bohrung oder dergleichen, vorgesehen ist, in welche das Bolzenelement eingerückt werden kann, wenn die Drehverstelleinrichtung bezüglich einer unbeabsichtigten Drehbewegung des drehbar gelagerten Bauteils gesichert werden soll. Nachteilig hierbei ist es, dass das Bolzenelement oftmals nur unzureichend präzise eingerückt werden kann, was auch ein verzögertes Festlegen der Drehverstelleinrichtung zur Folge haben kann. Besonders nachteilig ist zudem eine nicht spielfreie Verriegelung, insbesondere wenn sich die Verriegelungseinrichtungen bereits etliche Jahre in Nutzfahrzeugen im Einsatz befinden. Darüber hinaus bauen bisherige Verriegelungseinrichtungen und damit auch ein Sitzunterbau für den Fahrzeugsitz häufig sehr hoch.

Aus WO2010114966 A1 ist ein Sitz mit den Merkmalen des Oberbegriffs vom Anspruch 1 bekannt.

Es ist Aufgabe der Erfindung, gattungsgemäße Verriegelungseinrichtungen an Fahrzeugsitzen derart weiterzuentwickeln, um zumindest die vorstehend genannten Nachteile zu überwinden.

Die Aufgabe der Erfindung wird von einem Nutzfahrzeugsitz mit einem Sitzteil, mit einem Rückenlehnenteil und mit einem Sitzunterbau zum Anordnen an einem Karosserieteil eines Nutzfahrzeugs gelöst, bei welchem der Sitzunterbau eine Verriegelungseinrichtung zum Sichern einer unbeabsichtigten Drehbewegung einer Drehverstelleinrichtung zum Drehen zumindest des Sitzteils gegenüber dem Karosserieteil aufweist, wobei die Verriegelungseinrichtung ein entlang einer Verschiebeachse translatorisch verschieblich gelagertes Verriegelungselement zum Festlegen der Drehverstelleinrichtung umfasst, und wobei das Verriegelungselement ein um die Verschiebeachse verdrehgesichertes Grundkörperelement umfasst, dessen Grundkörperhöhe mindestens um das zwei- oder vierfache, vorzugsweise um mehr als das sechsfache, geringer ist als dessen Grundkörperbreite.

Durch ein derartig verdrehgesichertes Grundkörperelement lässt sich das Verriegelungselement einerseits definiert und damit wesentlich präziser als bisher entlang der Verschiebeachse führen. Insbesondere wenn das Verriegelungselement eine Zahnelementeeinheit aufweist, können Zahnelemente der Zahnelementeeinheit für einen Eingriff stets präzise im Raum positioniert gehalten werden, da erfindungsgemäß ein Kippeln des Verriegelungselements um die Verschiebechse herum ausgeschlossen werden kann.

Andererseits baut das Verriegelungselement aufgrund der extrem geringen Höhe des Grundkörperelements besonders flach, wodurch auch die Bauhöhe der Verriegelungseinrichtung extrem gering gehalten werden kann. Letztlich kann hierdurch der Sitzunterbau entweder niedriger ausgelegt werden, oder es steht der an der Verriegelungseinrichtung eingesparte Bauraum für andere Bauteile oder Bauteilgruppen des Sitzunterbaus zur Verfügung. Allein aus diesen Gründen ist es vorteilhaft, wenn das Verriegelungselement als Flachschieberelement ausgestaltet ist.

Es versteht sich, dass das vorliegende Verriegelungselement allein schon aufgrund der Gestalt des Grundkörperelements gut verdrehgesichert geführt ist. Umfasst das Verriegelungselement bzw. das um die Verschiebeachse verdrehgesicherte Grundkörperelement kumulativ noch eine Nut-Federeinheit, mittels welcher es entlang der Verschiebeachse geführt ist, kann insbesondere die Führungpräzision nochmals verbessert werden.

Das Nutteil und das Federteil der Nut-Federeinheit erstrecken sich hierbei in Richtung der Verschiebeachse, so dass eine sehr einfach bauende Führung erzielbar ist.

Es versteht sich, dass vorliegend ein Nutteil oder ein Federteil der Nut-Federeinheit an dem Verriegelungselement bzw. dessen Grundkörperelement vorgesehen werden kann. Auch eine Kombination von Nutteil und Federteil ist an dem Verriegelungselement möglich.

Idealerweise umfasst das Verriegelungselement jedoch nur Federteile der Nut-Federeinheit, so dass es hierdurch noch biegesteifer ausgestaltet werden kann. Dies kann sich insbesondere auf eine möglichst spielfrei festlegbare Drehverstelleinrichtung positiv auswirken.

Insbesondere wenn diese Federteile an zwei sich gegenüberliegenden Flächen des Verriegelungselements angeordnet sind, kann eine nochmals verbesserte Führung dieses Verriegelungselements erreicht werden. Idealerweise liegen die beiden sich gegenüberliegend angeordneten Federteile in einer gemeinsamen Ebene, vorzugsweise in einer gemeinsamen Vertikalebene.

Insofern sieht eine bevorzugte Ausführungsvariante vor, dass das Verriegelungselement mindestens an zwei Seiten, vorzugsweise an seiner Ober- und Unterseite, ein Federteil einer Nut-Federeinheit aufweist. Hierdurch kann die Drehverstelleinrichtung insbesondere auch hinsichtlich einer Einwirkung von besonders großen aufzunehmenden Verriegelungskräften spielfrei gesichert werden, wodurch insbesondere auch der Sitzkomfort für einen Fahrgast erheblich erhöht werden kann.

Weist das Verriegelungselement zudem wenigstens ein Zahnelement zum Eingriff in eine Zahnkranzverzahnung auf, welches zumindest teilweise durch ein Federteil einer Nut-Federeinheit ausgebildet ist, kann eine gute Verriegelungssicherheit gewährleistet werden.

Eine Verriegelungspräzision der Verriegelungseinrichtung kann weiter verbessert werden, wenn das Verriegelungselement eine Zahnelementeeinheit mit drei Zahnelementen aufweist, mittels welchen das Verriegelungselement in eine Zahnkranzverzahnung eines vorzugsweise ortsfesten Zahnkranzes eingreifen kann. Hierdurch kann das Verriegelungselement zudem konstruktiv besonders einfach in beiden Drehrichtungen der Drehverstelleinrichtung spielfrei gelagert werden.

Darüber hinaus ist es vorteilhaft, wenn die Verriegelungseinrichtung ein eine Zahnelementeeinheit umfassendes Verriegelungselement und einen eine Zahnkranzverzahnung umfassenden ortsfesten Zahnkranz aufweist, wobei sich das Verriegelungselement zum Verriegeln der Drehverstelleinrichtung mindestens mit zwei Zahnkranzzahnelementen der Zahnkranzverzahnung im Eingriff befindet. Hierdurch kann die Gefahr einer spielbehafteten Verriegelung der Drehverstelleinrichtung weiter reduziert werden.

Beispielsweise weist der Zahnkranz eine mit 7,5° definierte Zahnteilung auf, in welcher das Verriegelungselement mit seinen drei Zahnelementen einrücken kann. Die mit 7,5° definierte Zahnteilung stellt hierbei jedoch nur eine erste Ausführungsvariante dar. Andere Zahnteilungen sind auch möglich.

Eine weitere vorteilhafte Ausführungsvariante sieht vor, dass die Verriegelungseinrichtung ein Einrückfederelement zum Einrücken einer Zahnelementeeinheit des Verriegelungselements in eine ortsfest angeordnete Zahnkranzverzahnung umfasst, wobei das Einrückelement horizontal auf Höhe der Zahnelementeeinheit angeordnet ist. Hierdurch kann die Bauhöhe der Verriegelungseinrichtung ebenfalls vorteilhaft gering gehalten werden.

Das Einrückfederelement ist vorliegend vorzugsweise als Druckwendelfeder ausgeführt.

Ist das Verriegelungselement federvorgespannt gelagert zwischen einem ersten Führungsplattenelement und einem zweiten Führungsplattenelement der Verriegelungseinrichtung angeordnet, kann einerseits eine Einrücksicherheit des Verriegelungselements weiter verbessert werden. Auch die Gefahr einer unbeabsichtigten Entriegelung kann hierdurch verringert werden. Andererseits kann insbesondere durch die beiden Führungsplattenelemente die Bauhöhe der Verriegelungseinrichtung weiter reduziert werden.

Idealerweise sind die beiden Führungsplattenelemente konstruktiv einfach durch ein Ober-und Unterschalenteil der Drehverstelleinrichtung realisiert, so dass allgemein die Bauhöhe des Sitzunterbaus erheblich reduziert werden kann.

Der Aufbau der vorliegenden Verriegelungseinrichtung kann weiter einfach gehalten werden, wenn die Verriegelungseinrichtung ein Zahnkranzplattenelement mit einem Zahnkranz mit einer konkav ausgebildeten Zahnkranzverzahnung umfasst, wobei das Zahnkranzplattenelement zwischen einem ersten und einem zweiten Führungsplattenelement der Verriegelungseinrichtung angeordnet ist.

Vorteilhafterweise können diese beiden Führungsplattenelemente derart miteinander verbunden, insbesondere verschraubt, werden, dass das Zahnkranzplattenelement dazwischen baulich einfach derart gehaltert angeordnet ist, dass die beiden Führungsplattenelemente gemeinsam gegenüber dem Zahnkranzplattenelement drehbar sind.

Umfasst das erste Führungsplattenelement ein erstes Kugellagerplattenelement der Drehverstelleinrichtung und das zweite Führungsplattenelement ein zweites Kugellagerplattenelement der Drehverstelleinrichtung, wobei die Führungsplattenelemente kreisförmige Kugellaufbahnen der Drehverstelleinrichtung ausgestalten, kann eine außerordentlich günstige Bauteilreduzierung an dem Sitzunterbau erzielt werden.

Eine weitere vorteilhafte Bauteilreduzierung kann erreicht werden, wenn das Zahnkranzplattenelement ein weiteres Kugellagerplattenelement der Drehverstelleinrichtung mit kreisförmigen Kugellaufbahnen ausgestaltet.

Eine verschleißarme und damit dauerhaft spielfreie Verriegelung der Drehverstelleinrichtung kann auch dadurch erreicht werden, wenn zwei sich gegenüberliegende Zahnflanken zweier benachbarter Zahnkranzzahnelemente eines Zahnkranzplattenelemente der Verriegelungseinrichtung einen Winkel von 10° einschließen.

Insbesondere ist der Flankenwinkel der Zahngeometrie hinsichtlich des Verriegelungselements so ausgestaltet, dass diese Zahngeometrie im Zusammenspiel mit dem Zahnkranz eine sichere, spielfreie Verriegelung gewährleistet, und sich diese Verriegelung zugleich leichtgängig und insbesondere ohne Selbsthemmung entriegeln lässt.

Darüber hinaus kann die Verriegelungseinrichtung konstruktiv sehr einfach betätigt werden, wenn das Verriegelungselement mithilfe eines Bowdenzugs entlang der Verschiebeachse entgegen der Federkraft des Einrückfederelements ausgerückt wird. Hierzu ist der Bowdenzug einerseits an dem Verriegelungselement festgelegt und andererseits mit einem in der Nähe des Sitzteils platzierten Griff verbunden. Es versteht sich, dass auch eine diesbezüglich anders ausgestaltete Mechanik verwendet werden kann.

Weitere Vorteile, Ziele und Eigenschaften vorliegender Erfindung werden anhand anliegender Zeichnung und nachfolgender Beschreibung erläutert, in welchen beispielhaft ein Nutzfahrzeugsitz mit einer ein um eine Verschiebeachse verdrehgesichertes Grundkörperelement umfassenden Verriegelungseinrichtung dargestellt und beschrieben ist. In der Zeichnung zeigen:
- Figur 1: schematisch eine perspektivische Ansicht eines Nutzfahrzeugsitzes mit einem eine Horizontalbewegungsvorrichtung umfassenden Sitzunterbau, welche eine Verriegelungseinrichtung mit einem um die Verschiebeachse verdrehgesicherten Grundkörperelement aufweist, dessen Höhe mindestens um das sechsfache geringer ist als dessen Breite;
- Figur 2: schematisch eine perspektive Ansicht der Horizontalbewegungsvorrichtung des Sitzunterbaus des Nutzfahrzeugsitzes aus der Figur 1;
- Figur 3: schematisch eine Explosionsansicht der Horizontalbewegungsvorrichtung aus den Figuren 1 und 2;
- Figur 4: schematisch eine Aufsicht der in der Horizontalbewegungsvorrichtung integrierten Verriegelungseinrichtung mit einem aus einem Zahnkranz ausgerückten Verriegelungselement;
- Figur 5: schematisch eine Detailansicht des aus dem Zahnkranz ausgerückten Verriegelungselements;
- Figur 6: schematisch eine perspektivische Ansicht des Verriegelungselements;
- Figur 7: schematisch eine weitere Aufsicht der in der Horizontalbewegungsvorrichtung integrierten Verriegelungseinrichtung mit einem in den Zahnkranz eingerückten Verriegelungselement;
- Figur 8: schematisch eine Detailansicht des in den Zahnkranz eingerückten Verriegelungselements;
- Figur 9: schematisch eine perspektivische Ansicht eines ersten Führungsplattenelements der Verriegelungseinrichtung;
- Figur 10: schematisch eine perspektivische Ansicht eines Zahnkranzplattenelements der Verriegelungseinrichtung; und
- Figur 11: schematisch eine perspektivische Ansicht eines zweiten Führungsplattenelements der Verriegelungseinrichtung.

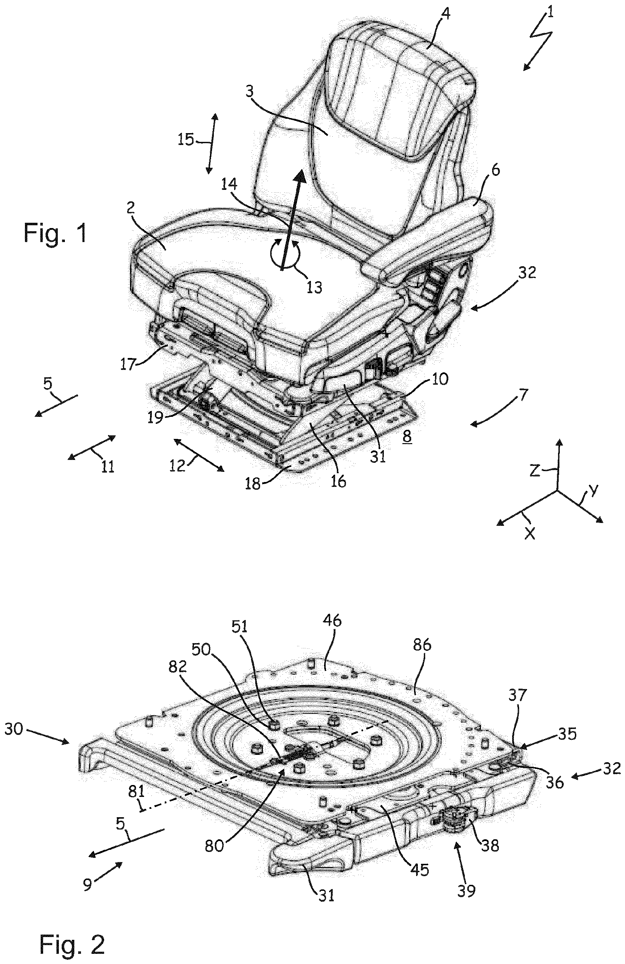

Der in der Figur 1 gezeigte Nutzfahrzeugsitz 1 umfasst ein Sitzteil 2 zum Daraufsitzen eines Fahrgastes und ein Rückenlehnenteil 3 zum rückseitigen Abstützen des Fahrgastes. Das Rückenlehnenteil 3 ist in diesem Ausführungsbeispiel noch mit einem Kopfstützenteil 4 ausgerüstet. In Vorwärtsfahrrichtung 5 gesehen ist rechts seitlich an dem Rückenlehnenteil 3 zusätzlich noch ein Armlehnenteil 6 befestigt. Des Weiteren umfasst der Nutzfahrzeugsitz 1 noch einen Sitzunterbau 7, mittels welchem der Nutzfahrzeugsitz 1 in seiner Gesamtheit an einem Karosserieteil 8, wie etwa einem Kabinenboden einer Nutzkraftfahrzeugkabine, befestigt ist.

Um den Nutzfahrzeugsitz 1 vielfältig an die unterschiedlichsten Einsatzerfordernisse des Fahrgastes anpassen und auch einen bestmöglichen Sitzkomfort bieten zu können, weist der Sitzunterbau 7 in diesem Ausführungsbeispiel eine Horizontalbewegungsvorrichtung 9 und eine Vertikalbewegungsvorrichtung 10 auf.

Mittels der Horizontalbewegungsvorrichtung 9 kann zumindest das Sitzteil 2 und damit verbundene Bauteile, wie beispielsweise das Rückenlehnenteil 3, translatorisch in Längsverstellrichtung 11 (x-Achse) und translatorisch in Seitenverstellrichtung 12 (y-Achse) sowie rotatorisch in Drehverstellrichtung 13 um eine Hochachse 14 (z-Achse) bewegt werden, wie nachfolgend noch erläutert ist. Die Horizontalbewegungsvorrichtung 9 besitzt aufgrund ihrer kompakten Bauweise in diesem Ausführungsbeispiel lediglich eine sehr geringe Bauhöhe von 57 mm.

Mittels der Vertikalbewegungsvorrichtung 10 kann zumindest das Sitzteil 2 und damit verbundene Bauteile, wie eben das Rückenlehnenteil 3, translatorisch in Vertikalverstellrichtung 15 bezüglich der Hochachse 14 bewegt werden. Hierzu umfasst die Vertikalbewegungsvorrichtung 10 ein Scherengestell 16, welches zwischen einer Deckenplatte 17, welche die Horizontalbewegungsvorrichtung 9 trägt, der Vertikalbewegungsvorrichtung 10 und einer Bodenplatte 18 der Vertikalbewegungsvorrichtung 10 derart angeordnet ist, dass die Horizontalbewegungsvorrichtung 9 gegenüber der Bodenplatte 18 vertikal beweglich gelagert ist. Des Weiteren umfasst die Vertikalbewegungsvorrichtung 10 noch eine Dämpfer-Federeinrichtung 19 zum Federn und Dämpfen einer Vertikalbewegung an dem Nutzfahrzeugsitz 1 in Vertikalrichtung 15.

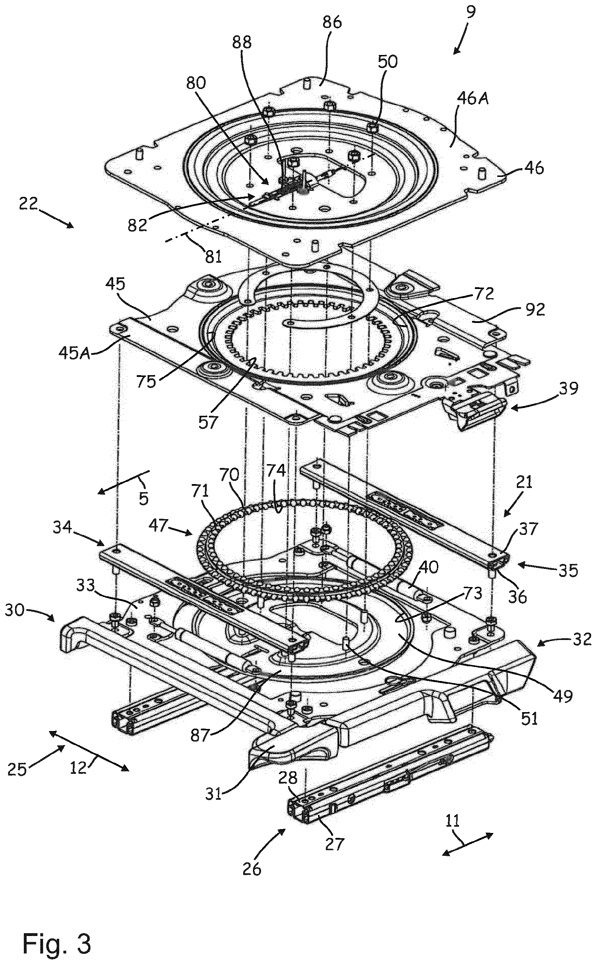

Die insbesondere in den Figuren 2 und 3 näher gezeigte Horizontalbewegungsvorrichtung 9 umfasst eine Längsverstelleinrichtung 20, eine Querverstelleinrichtung 21 und eine Drehverstelleinrichtung 22, um den Nutzfahrzeugsitz 1 im Sinne der vorgenannten Längsverstellrichtung 11, Seitenverstellrichtung 12 bzw. Drehverstellrichtung 13 bewegen bzw. einstellen zu können. Die Horizontalbewegungsvorrichtung 9 kann in einem anderen nicht minder vorteilhaften Ausführungsbeispiel auch nur eine der Verstelleinrichtungen 20, 21 und 22 oder eine beliebig andere Kombination hiervon aufweisen.

Mittels der Längsverstelleinrichtung 20 kann ein vorderer Längsverstellweg von 120 mm und ein hinterer Längsverstellweg von 90 mm bezogen auf eine Neutrallängsposition erzielt werden, während mittels der Querverstelleinrichtung 21 ein Querverstellweg um eine Neutralquerposition von +/- 25 mm erreicht werden kann. Mittels der Drehverstelleinrichtung 22 kann in 7,5° Schritten jeweils eine Schwenkbewegung von 60° um eine Neutraldrehposition und/oder eine 180° Drehung erreicht werden.

Die Längsverstelleinrichtung 20 liegt im Wesentlichen auf einer horizontalen Höhe der Drehverstelleinrichtung 22, wodurch die Horizontalbewegungsvorrichtung 9 extrem flach baut. Die Längsverstelleinrichtung 20 umfasst im Wesentlichen eine rechte Längsschieneneinheit 25 und eine linke Längsschieneneinheit 26 (siehe Figur 3), wobei jede der Längsschieneneinheiten 25, 26 ein Führungsschienenelement 27 (nur exemplarisch beziffert) und ein Gleitschienenelement 28 (ebenfalls nur exemplarisch beziffert) umfasst. Das Führungsschienenelement 27 ist hierbei an der Deckenplatte 17 der Vertikalbewegungsvorrichtung 10 angeschraubt, und damit oberhalb der Vertikalbewegungsvorrichtung 10 zwischen dieser und dem Sitzteil 2 angeordnet.

Darüber hinaus ist der Längsverstelleinrichtung 20 in diesem Ausführungsbeispiel noch eine Doppelarretiereinheit 30 zugeordnet, mittels welcher das jeweilige Gleitschienenelement 28 an dem entsprechenden Führungsschienenelement 27 verriegelbar bzw. entriegelbar ist, so dass der Nutzfahrzeugsitz 1 in der Längsverstellrichtung 11 festgelegt oder bewegt werden kann.

Um die Doppelarretiereinheit 30 durch den Fahrgast manuell betätigen können, umfasst die Längsverstelleinrichtung 11 noch ein händisch betätigbares Greifelement 31, welches seitlich neben dem Sitzteil 2 in einer Betätigungskonsole 32 des Nutzfahrzeugsitzes 1 integriert angeordnet ist.

Die Gleitschienenelemente 28 der Längsschieneneinheiten 25 und 26, die Doppelarretiereinheit 30 und auch das händisch betätigbare Greifelement 31 mit seiner Mechanik sind an einem Basisträgerplattenteil 33 der Horizontalbewegungsvorrichtung 9 befestigt, an welchem ebenfalls Querschieneneinheiten 34 und 35 der Querverstelleinrichtung 21 befestigt sind. Jede der Querschieneneinheiten 34 und 35 weist ein Führungsschienenquerelement 36 und ein Gleitschienenquerelement 37 auf, um eine Bewegung gemäß der Seitenverstellrichtung 12 zu ermöglichen.

Darüber hinaus sind in den Darstellungen gemäß der Figuren 1 bis 3 noch weitere Komponenten der Querverstelleinrichtung 21 erkennbar, wie beispielsweise ein händisch betätigbares Hebelelement 38 (siehe insbesondere Figur 2) einer Verriegelungseinheit 39 zum Festlegen oder Lösen der Querverstelleinrichtung 21 sowie Dämpferelemente 40 (nur exemplarisch beziffert, siehe Figur 3) zum Dämpfen einer Lateralschwingung bei gelöster Querverstelleinrichtung 21.

Das jeweilige Führungsschienenquerelement 36 ist mit dem Basisträgerplattenteil 33 verschraubt ist, während das an dem Führungsschienenquerelement 36 entsprechend geführte Gleitschienenquerelement 37 jeweils an einem Unterschalenteil 45 angeordnet ist.

In diesem Ausführungsbeispiel gehört das Unterschalenteil 45 zu der Drehverstelleinrichtung 22 und bildet mit einem entsprechend geformten zweilagigen Oberschalenteil 46 eine Lagerung für eine Kugellagereinheit 47. Unterseitig wird die Kugellagereinheit 47 durch ein Deckelelement 49 komplettiert und geschützt, welches den zweiten Anteil des zweilagigen Oberschalenteils 46 bildet, und mit dessen Hilfe das Unterschalenteil 45, das Oberschalenteil 46 und damit auch die Kugellagereinheit 47 der Drehverstelleinrichtung 22 verspannt werden. Hierzu werden Schraubenmuttern 50 mit entsprechenden Gewindebolzen 51 des Deckelelements 49 verschraubt.

Des Weiteren gestaltet das Unterschalenteil 45 ein drehfestes Schalenfestteil 45A der Drehverstelleinrichtung 22 aus, welches drehfest in dem Sitzunterbau 7 integriert ist, während das vorliegende zweilagige Oberschalenteil 46 entsprechend ein gegenüber dem Schalenfestteil 45A drehbares Schalendrehteil 46A formuliert, welches mithilfe des Deckelelements 49 durch zwei Kugelkranzteile 70 und 71 der Kugellagereinheit 47 an dem Schalenfestteil 45A um die Hochachse 14 drehbar gelagert ist.

Darüber hinaus zeichnet sich die Kugellagereinheit 47 durch kreisförmige Kugellaufbahnen 72 und 73 (siehe Figur 3) aus, entlang welcher die Vielzahl an Kugeln 74 (hier nur exemplarisch beziffert) der Kugelkranzteile 70 und 71 rollen können, wenn sich das Schalendrehteil 46A um die Hochachse 14 dreht.

Insbesondere die erste kreisförmige Kugellaufbahn 72 ist durch eine in dem Schalenfestteil 45A eingepresste tellerförmige Ausnehmung 75 gebildet, wobei das Schalendrehteil 46A eine hierzu komplementäre Ausformung umfasst. Ähnlich verhält es sich bezüglich der zweiten kreisförmigen Kugellaufbahn 73 hinsichtlich des Deckelelements 49 (deshalb nicht gesondert beziffert).

Vorteilhafterweise liegt die Kugellagereinheit 47 zumindest teilweise in einer Horizontalebene (hier nicht explizit eingezeichnet), in welcher ebenfalls die beiden Längsschienenschieneneinheiten 26 und 27 zumindest teilweise angeordnet sind, so dass die Bauhöhe der vorliegenden Horizontalbewegungsvorrichtung 9 nochmals enorm reduziert ist.

Der Begriff "Horizontalebene" ist im Sinne der vorliegenden Erfindung derart zu verstehen, dass diese Ebene sich in Fahrzeugbreitenrichtung und in Fahrzeuglängsrichtung erstreckt und nur dann horizontal ausgerichtet ist, wenn das Nutzfahrzeug sich auf horizontal ausgerichtetem Untergrund befindet. Andernfalls neigt sich diese Ebene mit Neigung des gesamten Nutzfahrzeugs entsprechend der Fahrzeugbreiten- und Fahrzeuglängsrichtung.

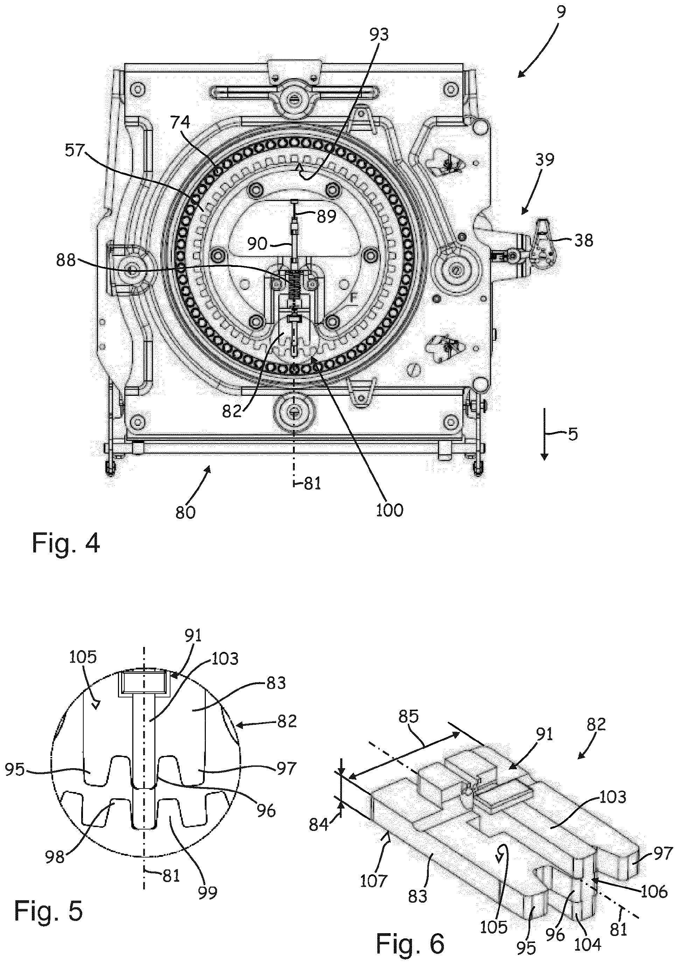

Wie insbesondere anhand der Darstellungen der Figuren 4 bis 8 gut zu erkennen ist, wird die Drehverstelleinrichtung 22 mittels einer Verriegelungseinrichtung 80 gegenüber einer unbeabsichtigten Drehbewegung um die Hochachse 14 gesichert. Die Verriegelungseinrichtung 80 umfasst hierzu ein entlang einer Verschiebeachse 81 translatorisch verschieblich gelagertes Verriegelungselement 82 zum Festlegen der Drehverstelleinrichtung 22.

Das Verriegelungselement 82 weist erfindungsgemäß ein um die Verschiebeachse 81 verdrehgesichertes Grundkörperelement 83 auf, dessen Grundkörperhöhe 84 in diesem Ausführungsbeispiel um das sechsfache geringer ist als dessen Grundkörperbreite 85.

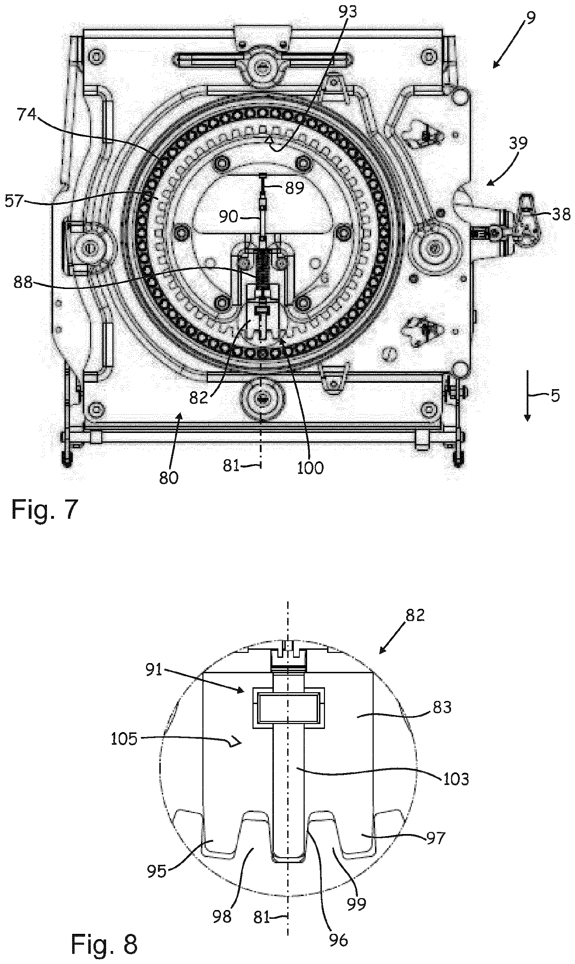

Somit kann es besonders flach bauend zwischen einem ersten Führungsplattenelement 86 und einem zweiten Führungsplattenelement 87 platziert werden (siehe auch Figuren 8 bis 11).

Vorteilhafterweise sind die beiden Führungsplattenelemente 86 und 87 hierbei identisch mit den beiden Anteilen Oberschalenteil 46 und Deckelelement 49 des Schalendrehteils 46A, so dass Komponenten der Drehverstelleinrichtung 22 und Komponenten der Verriegelungseinrichtung 80 identisch ausgeführt sind. Insofern bedingen die beiden Führungsplattenelemente 86 und 87 sogleich ein erstes Kugellagerplattenelement 86A der Drehverstelleinrichtung 22 und ein zweites Kugellagerplattenelement 87A der Drehverstelleinrichtung 22.

Zudem ist das Verriegelungselement 82 mittels eines Einrückfederelements 88 federvorgespannt zwischen den beiden Führungsplattenelementen 86, 87 gelagert, wobei es in Kombination mittels eines Bowdenzugdrahtes 89 einer Bowdenzugeinheit 90 entlang der Verschiebeachse 81 bedarfsgerecht verschoben werden kann. Insofern umfasst das Verriegelungselement 82 noch eine Bowdenzugklemmhalterung 91.

Eine weitere Vereinfachung erfährt die Verriegelungseinrichtung 80 dadurch, dass sie ein Zahnkranzplattenelement 92 mit einer konkav ausgebildeten Zahnkranzverzahnung 93 umfasst. Dieses Zahnkranzplattenelement 92 ist ebenfalls zwischen dem ersten und dem zweiten Führungsplattenelement 86, 87 angeordnet, wobei es mit dem den Zahnkranz 57 umfassenden Unterschalenteil 45 des Schalendrehteils 45A identisch ist. Insofern ist der Aufbau des Sitzunterbaus 7 weiter erheblich vereinfacht.

Damit nun das Verriegelungselement 82 zum Verriegeln der Drehverstelleinrichtung 22 mit dem Zahnkranz 57 des Schalenfestteils 45A bzw. mit der Zahnkranzverzahnung 93 des Zahnkranzplattenelements 92 uneingeschränkt korrespondieren kann, zeichnet sich das vorliegende Verriegelungselement 82 noch durch eine Zahnelementeeinheit 94 aus, welche insgesamt drei Zahnelemente 95, 96 und 97 umfasst. Mit diesen Zahnelementen 95, 96 und 97 kann das Verriegelungselement 82 in die Zahnkranzverzahnung 93 des ortsfesten Zahnkranzes 57 eingreifen, wodurch die Drehverstelleinrichtung 22 insgesamt verriegelt ist.

Vorteilhafterweise kann das Verriegelungselement 82 mit diesen drei Zahnelementen 95, 96, 97 mit wenigstens zwei Zahnkranzzahnelementen 98 und 99 der Zahnkranzverzahnung 93 in Eingriff gebracht werden, wodurch das Zahnkranzplattenelement 92 immer betriebssicher in beide Drehrichtungen gemäß der Drehverstellrichtung 13 (siehe Figur 1) blockiert ist (vgl. Figuren 7 und 8).

Besonders sicher ist das Verriegelungselement 82 entlang der Verschiebeachse 81 durch eine Nut-Federeinheit 100 der Verriegelungseinrichtung 82 geführt.

Die Nut-Federeinheit 100 umfasst hierbei eine erste Nut 101, welche in dem ersten Führungsplattenelement 86 in Richtung der Verschiebeachse 81 eingebracht ist, und eine zweite Nut 102, welche entsprechend in dem zweiten Führungsplattenelement 87 in Richtung der Verschiebeachse 81 eingebracht ist.

Darüber hinaus umfasst die Nut-Federeinheit 100 an dem Verriegelungselement 82 ein erstes Federteil 103, welches im zusammengebauten Zustand der Verriegelungseinrichtung 80 mit der ersten Nut 101 korrespondiert. Ein zweites Federteil 104 des Verriegelungselements 82 korrespondiert dann entsprechend mit der zweiten Nut 102.

Das erste Federteil 103 ist vorliegend an der Oberseite 105 des Verriegelungselements 82 angeordnet, welche dem ersten Führungsplattenelement 86 zugewandt ist, wobei dieses erste Federteil 103 bis in die Spitze 106 des mittleren Zahnelements 96 hineingezogen ist.

Das zweite Federteil 104 hingegen befindet sich an der Unterseite 107 des Verriegelungselements 82, welche folglich dem zweiten Führungsplattenelement 87 zugewandt ist, wobei dieses zweite Federteil 104 ebenfalls bis in die Spitze 106 des mittleren Zahnelements 96 hineingezogen ist.

Durch diese konstruktiven Maßnahmen ist das Verriegelungselement 82 allgemein besonders gut gegenüber einem Kippen um die Verschiebeachse 81 gesichert.

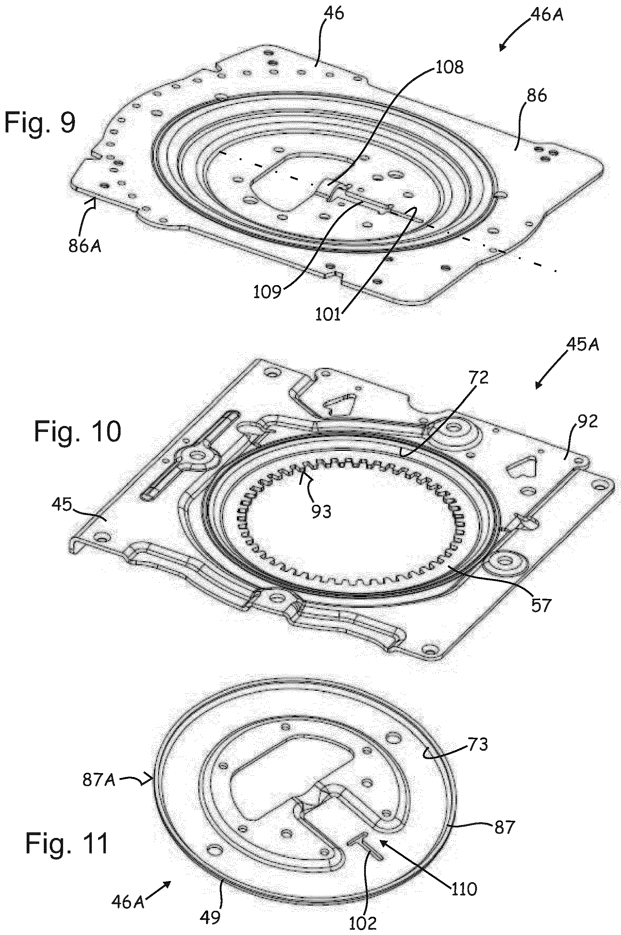

Bei dem in der Figur 9 gezeigten ersten Führungsplattenelement 86 erkennt man noch gut eine Positionierlasche 108, mittels welcher die Bowdenzugeinheit 90 zusätzlich festgelegt werden kann. Zwischen der Positionierlasche 108 und der ersten Nut 101 ist noch eine Positionieröffnung 109 zur Aufnahme der Bowdenzugeinheit 90 vorgesehen.

Nach der Darstellung gemäß der Figur 11 ist an dem zweiten Führungsplattenelement 87 hinter der zweiten Nut 102 noch ein Prägungsbereich 110 vorgesehen, der zur Aufnahme der Bowdenzugeinheit 90 und des Verriegelungselements 82 dient.

Je nachdem, ob es sich bei dem Nutzfahrzeugsitz 1 um einen Fahrersitz oder Beifahrersitz handelt, kann der Aufbau insbesondere des Sitzunterbaus 7 hinsichtlich der x-Achse auch spiegelbildlich ausgebildet sein, sprich: Die Betätigungskonsole 32 und insbesondere das händisch betätigbare Greifelement 31 kann anstatt auf der linken Nutzfahrzeugsitzseite auf der rechten Nutzfahrzeugsitzseite angeordnet sein.

### Bezugszeichenliste

- 1: Nutzfahrzeugsitz
- 2: Sitzteil
- 3: Rückenlehnenteil
- 4: Kopfstützenteil
- 5: Vorwärtsfahrrichtung
- 6: Armlehnenteil
- 7: Sitzunterbau
- 8: Karosserieteil
- 9: Horizontalbewegungsvorrichtung
- 10: Vertikalbewegungsvorrichtung
- 11: Längsverstellrichtung
- 12: Seitenverstellrichtung
- 13: Drehverstellrichtung
- 14: Hochachse
- 15: Vertikalverstellrichtung
- 16: Scherengestell
- 17: Deckenplatte
- 18: Bodenplatte
- 19: Dämpfer-Federeinrichtung
- 20: Längsverstelleinrichtung
- 21: Querverstelleinrichtung
- 22: Drehverstelleinrichtung
- 25: rechte Längsschieneneinheit
- 26: linke Längsschieneneinheit
- 27: Führungsschienenelement
- 28: Gleitschienenelement
- 30: Doppelarretiereinheit
- 31: Greifelement
- 32: Betätigungskonsole
- 33: Basisträgerplattenteil
- 34: vordere Querschieneneinheit
- 35: hintere Querschieneneinheit
- 36: Führungsschienenquerelement
- 37: Gleitschienenquerelement
- 38: Hebelelement
- 39: Verriegelungseinheit
- 40: Dämpferelemente
- 45: Unterschalenteil
- 45A: Schalenfestteil
- 46: Oberschalenteil
- 46A: Schalendrehteil
- 47: Kugellagereinheit
- 49: Deckelelement
- 50: Schraubenmuttern
- 51: Gewindebolzen
- 57: Zahnkranz
- 70: erstes Kugelkranzteil
- 71: zweites Kugelkranzteil
- 72: erste kreisförmige Kugellaufbahn
- 73: zweite kreisförmige Kugellaufbahn
- 74: Kugeln
- 75: tellerförmige Ausnehmung
- 80: Verriegelungseinrichtung
- 81: Verschiebeachse
- 82: Verriegelungselement
- 83: verdrehgesichertes Grundkörperelement
- 84: Grundkörperhöhe
- 85: Grundkörperbreite
- 86: erstes Führungsplattenelement
- 86A: erstes Kugellagerplattenelement
- 87: zweites Führungsplattenelement
- 87A: zweites Kugellagerplattenelement
- 88: Einrückfederelement
- 89: Bowdenzugdraht
- 90: Bowdenzugeinheit
- 91: Bowdenzugklemmhalterung
- 92: Zahnkranzplattenelement
- 93: Zahnkranzverzahnung
- 94: Zahnelementeeinheit
- 95: erstes Zahnelement
- 96: zweites Zahnelement
- 97: drittes Zahnelement
- 98: erstes Zahnkranzzahnelement
- 99: zweites Zahnkranzzahnelement
- 100: Nut-Federeinheit
- 101: erste Nut
- 102: zweite Nut
- 103: erstes Federteil
- 104: zweites Federteil
- 105: Oberseite
- 106: Spitze
- 107: Unterseite
- 108: Positionierlasche
- 109: Positionieröffnung
- 110: Prägungsbereich

## Patentansprüche

1. Nutzfahrzeugsitz (1) mit einem Sitzteil (2), mit einem Rückenlehnenteil (3) und mit einem Sitzunterbau (7) zum Anordnen an einem Karosserieteil (8) eines Nutzfahrzeugs, bei welchem der Sitzunterbau (7) eine Verriegelungseinrichtung (80) zum Sichern einer unbeabsichtigten Drehbewegung einer Drehverstelleinrichtung (22) zum Drehen zumindest des Sitzteils (2) gegenüber dem Karosserieteil (8) aufweist, wobei die Verriegelungseinrichtung (80) ein entlang einer Verschiebeachse (81) translatorisch verschieblich gelagertes Verriegelungselement (82) zum Festlegen der Drehverstelleinrichtung (22) umfasst, wobei das Verriegelungselement (82) ein um die Verschiebeachse (81) verdrehgesichertes Grundkörperelement (83) umfasst, dessen Grundkörperhöhe (84) mindestens um das zwei- oder vierfache, vorzugsweise um mehr als das sechsfache, geringer ist als dessen Grundkörperbreite (85), **dadurch gekennzeichnet, dass** das Verriegelungselement (82) eine Nut-Federeinheit (100) umfasst, mittels welcher es entlang der Verschiebeachse (81) geführt ist und wobei ein Nutteil und ein Federteil der Nut-Federeinheit (100) sich in Richtung der Verschiebeachse (81) erstrecken.

2. Nutzfahrzeugsitz (1) nach Anspruch 1,
**dadurch gekennzeichnet, dass**
das Verriegelungselement (82) mindestens an zwei Seiten, vorzugsweise an seiner Ober- und Unterseite (105, 107), ein Federteil (103, 104) einer Nut-Federeinheit (100) aufweist.

3. Nutzfahrzeugsitz (1) nach einem der Ansprüche 1 bis 2,
**dadurch gekennzeichnet, dass**
das Verriegelungselement (82) wenigstens ein Zahnelement (96) zum Eingriff in eine Zahnkranzverzahnung (93) aufweist, welches zumindest teilweise durch ein Federteil (103, 104) einer Nut-Federeinheit (100) ausgebildet ist.

4. Nutzfahrzeugsitz (1) nach einem der Ansprüche 1 bis 3,
**dadurch gekennzeichnet, dass**
das Verriegelungselement (82) eine Zahnelementeeinheit (94) mit drei Zahnelementen (95, 96, 97) aufweist, mittels welchen das Verriegelungselement (82) in eine Zahnkranzverzahnung (93) eines ortsfesten Zahnkranzes (57) eingreifen kann.

5. Nutzfahrzeugsitz (1) nach einem der Ansprüche 1 bis 4,
**dadurch gekennzeichnet, dass**
die Verriegelungseinrichtung (80) ein eine Zahnelementeeinheit (94) umfassendes Verriegelungselement (82) und einen eine Zahnkranzverzahnung (93) umfassenden ortsfesten Zahnkranz (57) aufweist, wobei sich das Verriegelungselement (82) zum Verriegeln der Drehverstelleinrichtung (22) mindestens mit zwei Zahnkranzzahnelementen (98, 99) der Zahnkranzverzahnung (93) im Eingriff befindet.

6. Nutzfahrzeugsitz (1) nach einem der Ansprüche 1 bis 5,
**dadurch gekennzeichnet, dass**
die Verriegelungseinrichtung (82) ein Einrückfederelement (88) zum Einrücken einer Zahneiementeeinheit (94) des Verriegelungselements (82) in eine ortsfest angeordnete Zahnkranzverzahnung (93) umfasst, wobei das Einrückfederelement (88) horizontal auf Höhe der Zahnelementeeinheit (94) angeordnet ist.

7. Nutzfahrzeugsitz (1) nach einem der Ansprüche 1 bis 6,
**dadurch gekennzeichnet, dass**
das Verriegelungselement (82) federvorgespannt gelagert zwischen einem ersten Führungsplattenelement (86) und einem zweiten Führungsplattenelement (87) der Verriegelungseinrichtung (80) angeordnet ist.

8. Nutzfahrzeugsitz (1) nach einem der Ansprüche 1 bis 7,
**dadurch gekennzeichnet, dass**
die Verriegelungseinrichtung (80) ein Zahnkranzplattenelement (92) mit einem Zahnkranz (57) mit einer konkav ausgebildeten Zahnkranzverzahnung (93) umfasst, wobei das Zahnkranzplattenelement (92) zwischen einem ersten und einem zweiten Führungsplattenelement (86, 87) der Verriegelungseinrichtung (80) angeordnet ist.

9. Nutzfahrzeugsitz (1) nach Anspruch 7 oder 8,
**dadurch gekennzeichnet, dass**
das erste Führungsplattenelement (86) ein erstes Kugellagerplattenelement (86A) der Drehverstelleinrichtung (22) und das zweite Führungsplattenelement (87) ein zweites Kugellagerplattenelement (87A) der Drehverstelleinrichtung (22) umfasst, wobei die Führungsplattenelemente (86, 87) kreisförmige Kugellaufbahnen (72, 73) der Drehverstelleinrichtung (22) ausgestalten.

## Claims

1. Commercial vehicle seat (1) comprising a seat part (2), a backrest part (3) and a seat substructure (7) for arranging on a body part (8) of a commercial vehicle, the seat substructure (7) comprising a locking device (80) for securing against an unintended rotary movement of a rotary adjustment device (22) for rotating at least the seat part (2) relative to the body part (8), the locking device (80) comprising a locking element (82) for fixing the rotary adjustment element (22), which locking element is mounted so as to be translatable along a displacement axis (81), the locking element (82) comprising a base body element (83) that is non-rotatable about the displacement axis (81) and the base body height (84) of which is at least two or four times, preferably more than six times, smaller than the base body width (85) thereof, **characterised in that** the locking element (82) comprises a tongue and groove unit (100), by means of which said locking element is guided along the displacement axis (81), a tongue portion and a groove portion of the tongue and groove unit (100) extending towards the displacement axis (81).

2. Commercial vehicle seat (1) according to claim 1, **characterised in that** the locking element (82) has a groove portion (103, 104) of a tongue and groove unit (100) at least on two sides, preferably on the upper side and the underside (105, 107) thereof.

3. Commercial vehicle seat (1) according to either claim 1 or claim 2, **characterised in that** the locking element (82) has at least one tooth element (96) for engaging in a ring gear toothing (93), which tooth element is formed at least in part by a groove portion (103, 104) of a tongue and groove unit (100).

4. Commercial vehicle seat (1) according to any of claims 1 to 3, **characterised in that** the locking element (82) has a tooth element unit (94) comprising three tooth elements (95, 96, 97), by means of which the locking element (82) can engage in a ring gear toothing (93) of a stationary ring gear (57).

5. Commercial vehicle seat (1) according to any of claims 1 to 4, **characterised in that** the locking device (80) has a locking element (82) comprising a tooth element unit (94) and a stationary ring gear (57) comprising ring gear toothing (93), the locking element (82) being in engagement with at least two ring gear tooth elements (98, 99) of the ring gear toothing (93) for locking the rotary adjustment device (22).

6. Commercial vehicle seat (1) according to any of claims 1 to 5, **characterised in that** the locking device (82) comprises an engagement spring element (88) for engaging a tooth element unit (94) of the locking element (82) in ring gear toothing (93) that is arranged so as to be stationary, the engagement spring element (88) being oriented horizontally on the level of the tooth element unit (94).

7. Commercial vehicle seat (1) according to any of claims 1 to 6, **characterised in that** the locking element (82) is mounted in a spring-preloaded manner between a first guide plate element (86) and a second guide plate element (87) of the locking device (80).

8. Commercial vehicle seat (1) according to any of claims 1 to 7, **characterised in that** the locking device (80) comprises a ring gear plate element (92) having a ring gear (57) having concave ring gear toothing (93), the ring gear plate element (92) being arranged between a first and a second guide plate element (86, 87) of the locking device (80).

9. Commercial vehicle seat (1) according to either claim 7 or claim 8, **characterised in that** the first guide plate element (86) comprises a first ball bearing plate element (86A) of the rotary adjustment device (22) and the second guide plate element (87) comprises a second ball bearing plate element (87A) of the rotary adjustment device (22), the guide plate elements (86, 87) forming circular ball bearing tracks (72, 73) of the rotary adjustment device (22).

## Revendications

1. Siège de véhicule utilitaire (1) avec une partie d'assise (2), avec une partie de dossier (3) et avec une infrastructure de siège (7) pour la disposition sur une partie de carrosserie (8) d'un véhicule utilitaire, dans lequel l'infrastructure du siège (7) comprend un dispositif de verrouillage (80) pour la sécurisation d'un mouvement de rotation indésirable d'un dispositif de réglage rotatif (22) pour la rotation d'au moins la partie d'assise (2) par rapport à la partie de carrosserie (8), le dispositif de verrouillage (80) comprenant un élément de verrouillage (82), logé de manière mobile en translation le long d'un axe de déplacement (81), pour la fixation du dispositif de réglage rotatif (22),
l'élément de verrouillage (82) comprenant un élément de corps de base (83) protégé contre une rotation autour de l'axe de déplacement (81), dont la hauteur de corps de base (84) est inférieure d'au moins deux ou quatre fois, de préférence de plus de six fois, à sa largeur de corps de base (85), **caractérisé en ce que**
l'élément de verrouillage (82) comprend une unité à rainure et languette (100), au moyen de laquelle il est guidé le long de l'axe de déplacement (81), et une partie de rainure et une partie de languette de l'unité à rainure et languette (100) s'étendant en direction de l'axe de déplacement (81).

2. Siège de véhicule utilitaire (1) selon la revendication 1,
**caractérisé en ce que**
l'élément de verrouillage (82) comprend, sur au moins deux côtés, de préférence au niveau de son côté supérieur et inférieur (105, 107), une partie de languette (103, 104) d'une unité à rainure et languette (100).

3. Siège de véhicule utilitaire (1) selon l'une des revendications 1 à 2,
**caractérisé en ce que**
l'élément de verrouillage (82) comprend au moins un élément à denture (96) pour l'emboîtement dans une denture de couronne dentée (93), qui est réalisé au moins partiellement par une partie de languette (103, 104) d'une unité à rainure et languette (100).

4. Siège de véhicule utilitaire (1) selon l'une des revendications 1 à 3,
**caractérisé en ce que**
l'élément de verrouillage (82) comprend une unité d'élément à denture (94) avec trois éléments à dentures (95, 96, 97), au moyen desquels l'élément de verrouillage (82) peut s'emboîter dans une denture de couronne dentée (93) d'une couronne dentée fixe (57).

5. Siège de véhicule utilitaire (1) selon l'une des revendications 1 à 4,
**caractérisé en ce que**
le dispositif de verrouillage (80) comprend un élément de verrouillage (82) comprenant une unité d'élément à denture (94) et une couronne dentée fixe (57) comprenant une denture de couronne dentée (93), l'élément de verrouillage (82) se trouvant en emboîtement, pour le verrouillage du dispositif de réglage rotatif (22), au moins avec deux éléments de dentures de couronne dentée (98, 99) de la denture de couronne dentée (93).

6. Siège de véhicule utilitaire (1) selon l'une des revendications 1 à 5,
**caractérisé en ce que**
le dispositif de verrouillage (82) comprend un élément de ressort d'enclenchement (88) pour l'enclenchement d'une unité d'élément à denture (94) de l'élément de verrouillage (82) dans une denture de couronne dentée fixe (93), l'élément de ressort d'enclenchement (88) étant disposé horizontalement à la hauteur de l'unité d'élément à denture (94).

7. Siège de véhicule utilitaire (1) selon l'une des revendications 1 à 6,
**caractérisé en ce que**
l'élément de verrouillage (82) est logé de manière précontrainte par un ressort entre un premier élément de plaque de guidage (86) et un deuxième élément de plaque de guidage (87) du dispositif de verrouillage (80).

8. Siège de véhicule utilitaire (1) selon l'une des revendications 1 à 7,
**caractérisé en ce que**
le dispositif de verrouillage (80) comprend un élément de plaque à couronne dentée (92) avec une couronne dentée (57) avec une denture de couronne dentée (93) conçue de manière concave, l'élément de plaque à couronne dentée (92) étant disposé entre un premier et un deuxième élément de plaque de guidage (86, 87) du dispositif de verrouillage (80).

9. Siège de véhicule utilitaire (1) selon la revendication 7 ou 8,
**caractérisé en ce que**
le premier élément de plaque de guidage (86) comprend un premier élément de plaque de roulement à billes (86A) du dispositif de réglage rotatif (22) et le deuxième élément de plaque de guidage (87) comprend un deuxième élément de plaque de roulement à billes (87A) du dispositif de réglage rotatif (22), les éléments de plaque de guidage (86, 87) formant des surfaces de roulement de billes circulaires (72, 73) du dispositif de réglage rotatif (22).
